# EUROPEAN PATENT SPECIFICATION

(11) **EP 3 564 657 B1**
(45) Date of publication and mention of the grant of the patent: **26.05.2021**
(21) Application number: 17886968.1
(22) Date of filing: 26.12.2017
(51) Int. Cl.: G01N 21/84, F21S 2/00, F21V 19/00, F21Y 101/00, F21Y 103/10, F21Y 103/33

(54) **LINEAR LIGHT IRRADIATION DEVICE**
VORRICHTUNG FÜR LINEARE LICHTBESTRAHLUNG
DISPOSITIF D'IRRADIATION DE LUMIÈRE LINÉAIRE

(30) Priority: 27.12.2016 JP 2016253894
(43) Date of publication of application: 06.11.2019
(73) Proprietor: CCS Inc., Kyoto-shi, Kyoto 602-8011 (JP)
(72) Inventor: YAGI, Motonao, Kyoto-shi Kyoto 602-8011 (JP)
(74) Representative: Müller Hoffmann & Partner
(86) International application number: PCT/JP2017/046569
(87) International publication number: WO 2018/124037

(56) References cited:
- JP-A- H07 320 521
- JP-A- 2002 208 466
- JP-A- 2008 300 077
- US-A1- 2010 103 661

## Description

### Technical Field

The present invention relates to a linear light irradiation device.

### Background Art

A light source of a type that makes a filament emit light, such as a halogen lamp, has a wide wavelength range, emits light having high intensity up to an infrared range, and in this respect, is superior to LEDs, so it is still now used as a light source for irradiating test objects with infrared light in a contamination test, a visual test, and the like using an infrared camera.

As a conventional linear light irradiation device, for example, like a linear light irradiation device disclosed in Patent Literature 1, there is one of a light source array type adapted to line up multiple halogen lamps whose terminals connected to sockets extend from light emission parts having filaments.

However, the above-described linear light irradiation device of a light source array type has had a problem that the sockets connected to the terminals of the halogen lamps are wider in width than the light emission parts of the halogen lamps to cause the sockets to impede light emission parts of adjacent halogen lamps from being arranged close together, a gap is created between adjacent light emission parts, and this makes the illuminance of linear light alternately strong and weak along a longitudinal direction to bring an irradiance distribution into an non-uniform state.

On the other hand, as one having solved such a problem, like a linear light irradiation device disclosed in Patent Literature 2, there is one of a guide type that makes light emitted from a halogen lamp incident from one ends of optical fibers and emits it from the other ends of the optical fibers that are linearly arranged.

However, the linear light irradiation of a guide type has had a problem that the light emitted from the halogen lamp repeats reflection in the optical fibers and is thereby attenuated to reduce the intensity of linear light, and the merits of the type making a filament emit light cannot be sufficiently utilized.

As described, the conventional two types of linear light irradiation device respectively have both merits and demerits, and the development of a linear light irradiation device having only both the merits of them has been demanded.

### Citation List

### Patent Literature

[Patent Literature 1]
   Japanese Unexamined Utility Model Publication JP-U56-60949
[Patent Literature 2]
   Japanese Unexamined Patent Publication JP-A2002-288644

### Summary of Invention

### Technical Problem

Therefore, the main object of the present invention is to, in a linear light irradiation device using light sources of a type that makes a filament emit light, improve the uniformity of illuminance along the longitudinal direction of linear light, and while attenuating the intensity of light emitted from filaments as little as possible and keeping high intensity, perform irradiation.

### Solution to Problem

That is, the linear light irradiation device according to the present invention includes a first light source array and a second light source array each adapted to array multiple light sources each including a light emission part having a filament and a socket connected with the back end of the light emission part, in which at least the respective light sources of the first light source array and the respective light sources of the second light source array are alternately arranged along an array direction in respectively different postures, and the filaments of the respective light sources of both the light source arrays are provided on a straight line or on an arc parallel to the array direction as viewed from a predetermined direction.

Such a configuration results in a state where in a gap formed between adjacent light sources arrayed in one light source array, a light source arrayed in the other light source array is arranged, and this makes it possible to narrow the arrangement interval between light sources, thus suppressing the strength/weakness (unevenness) of illuminance in the longitudinal direction of linear light. Also, since the respective light sources of both the light source arrays are provided on the same straight line or the same arc parallel as viewed from the predetermined direction, linear light close to linear light emitted from an elongated filament formed by connecting the filaments of the respective light sources can be reproduced, and this also makes it possible to obtain the linear light having highly uniform irradiance distribution. In addition, light emitted from the respective light sources can be used as the linear light without being attenuated, and therefore as with the above-described conventional linear light irradiation device of a light source array type, the linear light having high intensity can be obtained. Note that the predetermined direction is a direction in which the light sources are viewed from on the optical axis of the linear light.

Also, in the linear light irradiation device, the sockets of the respective light sources of both the light source arrays may be ones interposing the straight line or the arc on which the filaments are arrayed and are provided on both sides of it. Further, the respective light sources of both the light source arrays may be ones provided in the same posture on a light source array basis, and the respective light sources of the first light source array and the respective light sources of the second light source array may be ones provided in directly opposite postures.

In such a configuration, the sockets connected to the respective light sources of the first light source array and the sockets connected to the respective light sources of the second light source array can be separately arranged, thus making it possible to easily ensure an installation space and improve heat radiation performance.

In addition, in the linear light irradiation device, the light emission parts of the respective light sources of both the light source arrays may be connected to respectively different sockets.

In such a configuration, a conventionally commercially available, highly reliable, and inexpensive socket can be directly used, and the working effects of the present invention can be obtained without an increase in cost.

### Advantageous Effects of Invention

According to the linear light irradiation device according to the present invention configured as described above, the strength/weakness of illuminance along the longitudinal direction of the linear light can be moderated, and the attenuation of the light emitted from the light sources occurring until reaching an object can be suppressed. This makes it possible to irradiate the object with the linear light having highly uniform illuminance distribution along the longitudinal direction and high intensity.

### Brief Description of Drawings

[Fig. 1]

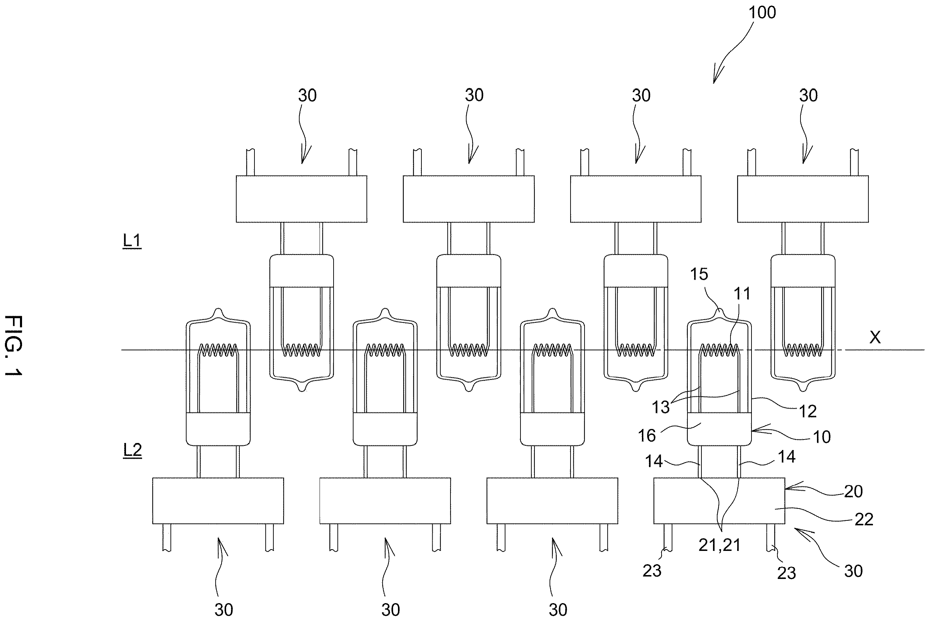

   Fig. 1 is a plan view illustrating a linear light irradiation device according to a first embodiment.
[Fig. 2]

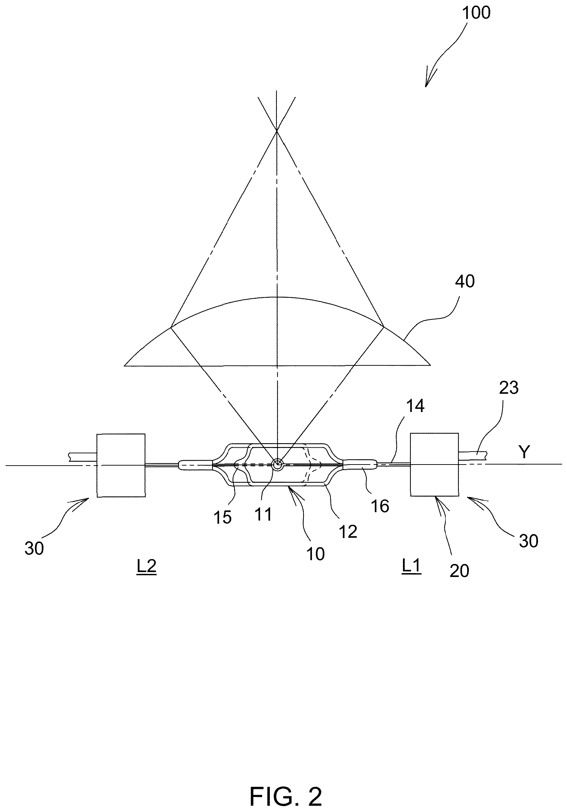

   Fig. 2 is a side view illustrating the linear light irradiation device illustrated in Fig. 1.
[Fig. 3]

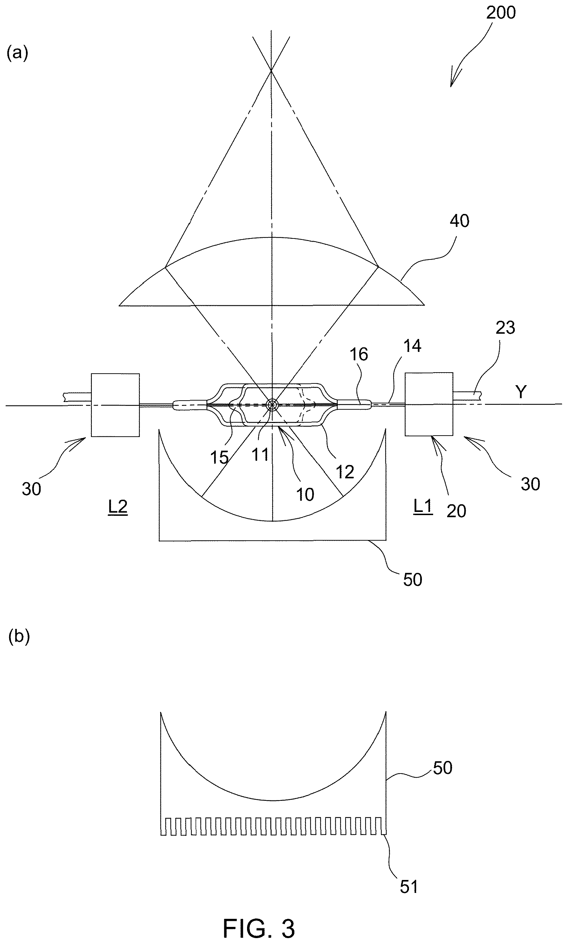

   Fig. 3 is a side view illustrating a linear light irradiation device according to a second embodiment.
[Fig. 4]

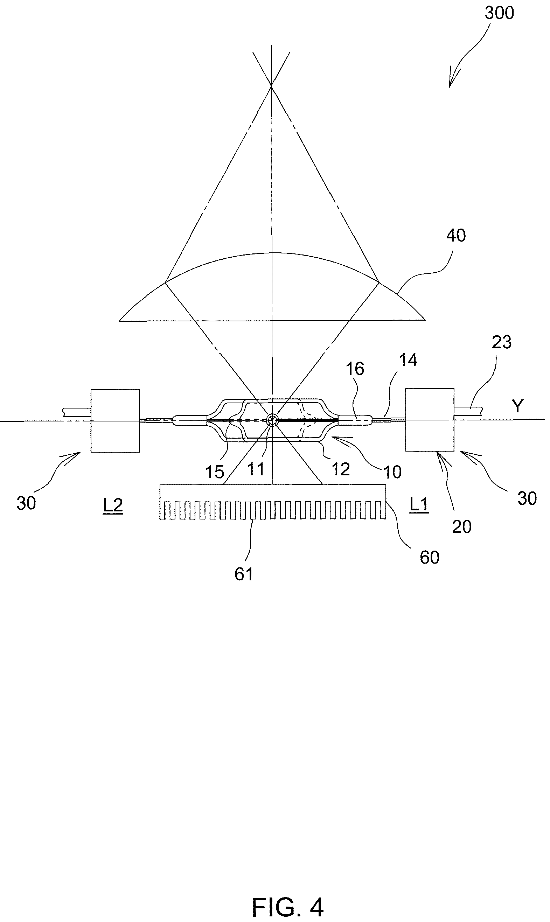

   Fig. 4 is a side view illustrating a linear light irradiation device according to a third embodiment.
[Fig. 5]

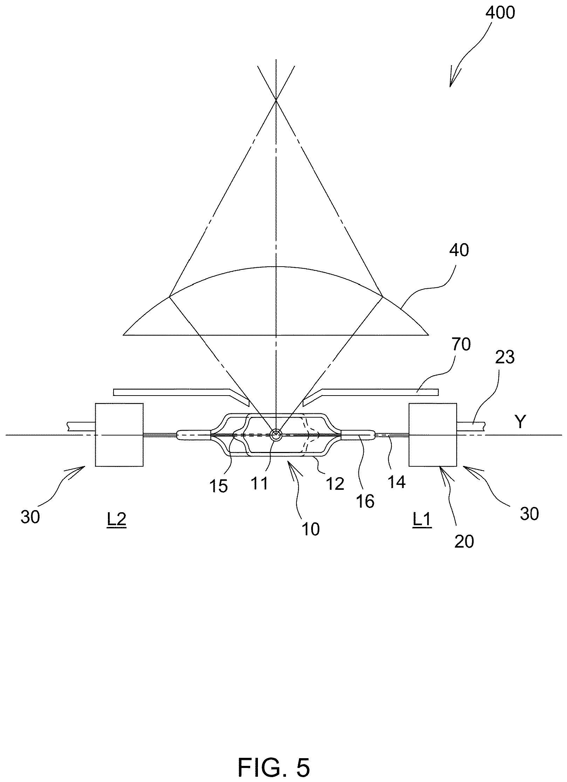

   Fig. 5 is a side view illustrating a linear light irradiation device according to a fourth embodiment.
[Fig. 6]

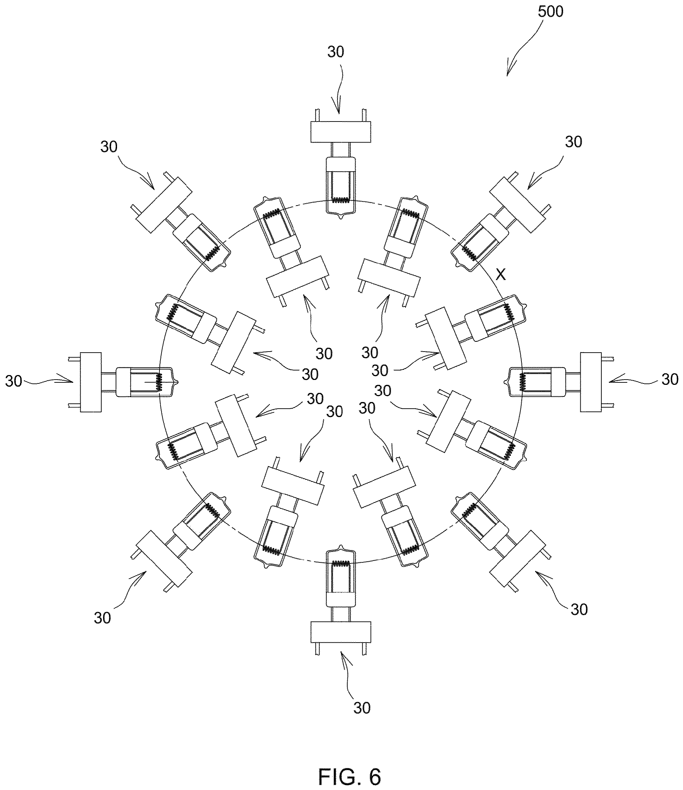

   Fig. 6 is a plan view illustrating a linear light irradiation device according to a fifth embodiment.
[Fig. 7]

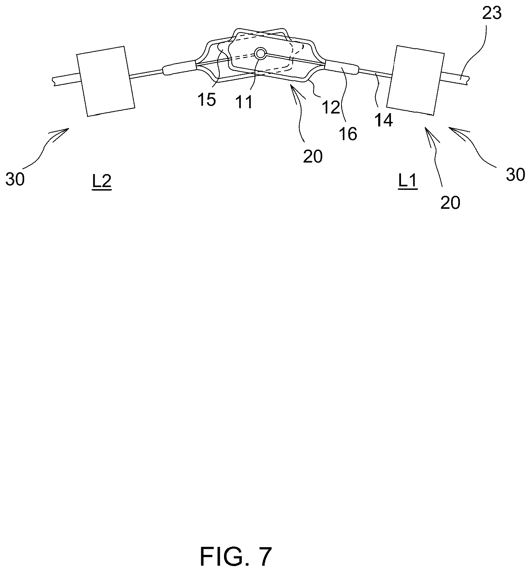

   Fig. 7 is a side view illustrating a linear light irradiation device according to another embodiment.
[Fig. 8]

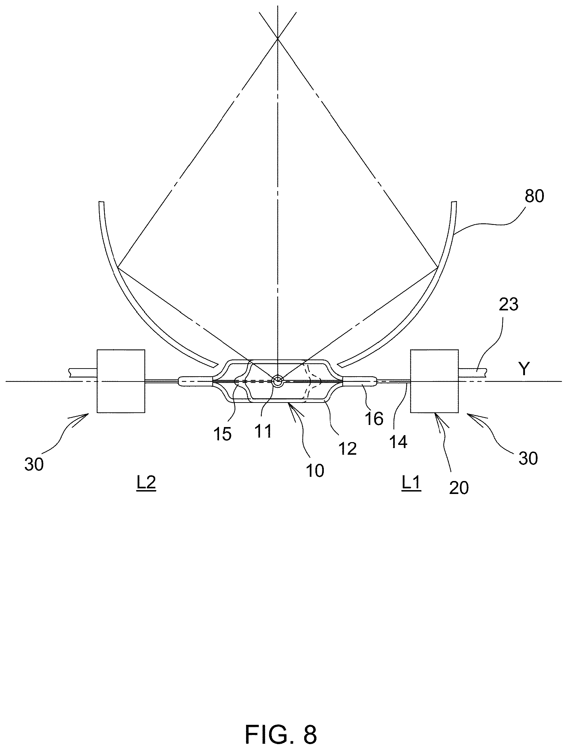

   Fig. 8 is a side view illustrating a linear light irradiation device according to another embodiment.

### Reference Signs List

100 Linear light irradiation device
10 Light source
20 Socket
30 Light source unit
40 Cylindrical lens
50 Mirror
60 Antireflection member
70 Shielding member

### Description of Embodiments

In the following, the linear light irradiation device according to the present invention will be described with reference to the drawings.

### <First embodiment>

A linear light irradiation device 100 according to the present embodiment is one used as a light source for, for example, irradiating a test object with infrared light when performing a contamination test, a visual test, or the like using an infrared camera. In addition, the application of the linear light irradiation device according to the present invention is not limited to the light source for the test, it is also usable for other applications, and the wavelength of light for the irradiation is also not limited at all.

As illustrated in Fig. 1 or Fig. 2, the linear light irradiation device 100 is configured to include: a first light source array L1 and a second light source array L2 each adapted to array multiple light source units 30 each adapted to connect a light source 10 to a socket 20; and an cylindrical lens 40 (see Fig, 2) that condense light emitted from the respective light sources 10 of both the light source arrays L1 and L2. In addition, the first light source array L1 and the second light source array L2 are arranged in parallel.

The light source 10 is a halogen lamp, and configured to include a light emission part 12 encapsulating a filament 11 and a pair of terminals 14 connected to one ends of lead-in wires 13 extending from both ends of the filament 11 and led outside the light emission part 12. In addition, the light emission part 12 is such that at least a filament encapsulating part is formed of glass, a tip 15 (glass fusion part) protrudes at one end of the light emission part 12, and the other end of the light emission part 12 is formed with a flat sealing part 16 that interposes and seals the joining parts between the lead-in wires 13 and the terminals 14. Also, the filament 11 is arranged perpendicular to a direction in which the pair of terminals 14 extends.

The socket 20 is configured to include: a blockish case body 22 having a pair of insertion ports 21 to be inserted with the pair of terminals 14 extending from the light source 10; and power codes 23 led out of the case body 22 and to be connected to an unillustrated power source. In addition, the case body 22 is formed to be wider in width than the light emission part 12 of the light source 10. Further, power supplied from the power codes 23 is transmitted to the filament 11 through the pair of terminals 14 and the pair of lead-in wires 13 via the socket 20, and thereby Joule heat is generated in the filament 11 to emit light.

The multiple light source units 30 constituting the first light source array L1 are in a state of directing the light emission parts 12 with respect to the pairs of terminals 14, more specifically the tips 14 of the light emission parts 12 toward the second light source array L2 side, and the respective light sources 10 are arranged in the same posture. Also, the multiple light source units 30 constituting the second light source array L2 are in a state of directing the light emission parts 12 with respect to the pairs of terminals 14, more specifically the tips 15 of the light emission parts 12 toward the first light source array L1 side, and the respective light sources 10 are arranged in the same posture. In addition, the respective light sources 10 of the first light source array L1 and the respective light source 10 of the second light source array L2 are alternately arranged along the array direction, and arranged in mutually directly opposite postures. In doing so, between light emission parts 12 of adjacent light sources 10 of one L1 (L2) of the light source arrays, a light emission part 12 of a light source 10 of the other light source array L2 (L1) is provided. In addition, the filaments 11 of all the light sources 10 are in a state where extension directions respectively coincide with the array direction, and provided on the same straight line (straight line X indicated by an alternate long and short dash line in Fig. 1) extending in the array direction. In detail, the filament 11 of each of the light sources 10 is formed by spirally shaping a wire rod along the surface of a cylinder, and arranged such that the straight line X passes through the openings at both ends of the cylinder, and preferably coincides with the center axis of the cylinder.

Also, the respective sockets 20 of the first light source array L1 and the respective sockets 20 of the second light source array L2 are arranged opposite with the straight line X as a center. Further, the light emission parts 12 of the respective light sources 10 are arranged interposed between the sockets 20 of the first light source array L1 and the sockets 20 of the second light source array L2.

In addition, as illustrated in Fig. 2, the tips 15 formed to the light emission parts 12 of the respective light sources 10 of both the light source arrays L1, L2 are arranged in the same plane (plane Y indicated by an alternate long and two short dashes line in Fig. 2), and the cylindrical lens 40 is installed on one side with respect to the plane Y. The cylindrical lens 40 is arranged such that the flat surface side is on the respective light sources 10 side and in parallel with the plane Y and the central axis line is in parallel with the straight line X, and linearly condenses the light emitted from the respective light sources 10. Accordingly, in the linear light irradiation device 100, the installation side of the cylindrical lens 40 corresponds to an emission direction of the linear light. In addition, the tips 15 of the light sources 10 are ones formed when the light emission parts 12 are sealed, but are not necessarily formed in the same shape, and arranging the tips 15 of the respective light sources 10 in the same plane also includes slight displacement from the same plane due to such differences in shape among the respective tips 15.

By configuring as described above, the emission direction of the linear light corresponds to a direction orthogonal to directions from the filaments 11 toward the tips 15 of the respective light sources 10, and therefore among the light emitted from the filaments 11 of the respective light sources 10, light passing through tips 15 causing stray light is difficult to reach in the emission direction of the linear light, improving the optical accuracy of the linear light.

### <Second embodiment>

A linear light irradiation device 200 according to the present embodiment is a variation of the above-described linear light irradiation device 100. As illustrated in Fig. 3(a), the linear light irradiation device 200 is configured to arrange a mirror 50, which reflects the light emitted from the respective light sources 10, on the side opposite to the irradiation side of the linear light with respect to the respective light sources 10 (on the other side with respect to the plane Y).

The mirror 50 is arranged with a concave curved surface of a semi-arc shape directed toward the respective light sources 10 side, and a centerline on the concave curved surface side is provided in parallel with the straight line X. In addition, the mirror 50 reflects the light emitted from the respective light sources 10 toward the cylindrical lens 40 side (emission direction side of the linear light) so as to pass the light through the filaments 11. Further, the mirror 50 is preferably formed of aluminum having high infrared light reflectance.

According to the linear light irradiation device 200, not only light emitted from the respective light sources 10 toward the one side with respect to the plane Y, but light emitted toward the other side can also be used as the linear light, making it possible to increase the intensity of the linear light.

In addition, in the linear light irradiation device 200, as illustrated in Fig. 3(b), a number of fins 51 may be provided on the opposite side surface to the concave curved surface of the mirror 50 to add a role as a heat sink for radiating heat generated in the mirror 50.

### <Third embodiment>

A linear light irradiation device 300 according to the present embodiment is a variation of the above-described linear light irradiation device 100. As illustrated in Fig. 4, the linear light irradiation device 300 is configured to arrange an antireflection member 60, which prevents the reflection of the light emitted from the respective light sources 10, on the side opposite to the irradiation side of the linear light with respect to the respective light sources 10 (on the other side with respect to the plane Y). In addition, a surface of the antireflection member 60 facing the respective light sources 10 side is applied with antireflection treatment by graphite coating, and the opposite side surface is provided with a number of fins 61 to play a role as a heat sink as well.

According to the linear light irradiation device 300, the antireflection member 60 prevents the reflection of the light emitted from the respective light sources 10 in a direction opposite to the emission direction of the linear light, and therefore stray light is eliminated, thus improving optical accuracy.

### <Fourth embodiment>

A linear light irradiation device 400 according to the present embodiment is a variation of the above-described linear light irradiation device 100. As illustrated in Fig. 5, the linear light irradiation device 400 is configured to arrange a shielding member 70, which prevents light passing through the tips 15 and their surroundings among the light emitted from the filaments 11 of the respective light sources 10 from reaching the emission side of the linear light, on the emission side of the linear light with respect to the respective light sources 10 (on the one side with respect to the plane Y) and between the respective light sources 10 and the cylindrical lens 40. In addition, the shielding member 70 is formed of plate materials installed for the respective light source arrays L1, L2, and formed in a shape in which parts of the respective plate materials opposite to the tips 15 are bent toward the respective light sources 10 side.

According to the linear light irradiation device 400, the light passing through the tips 15 of the respective light sources 10 and their surroundings causing stray light is eliminated by the shielding member 70, thus making it possible to improve optical accuracy. Also, the presence of the shielding member 70 can also prevent damage to wiring.

### <Fifth embodiment>

A linear light irradiation device 500 according to the present embodiment is a variation of the above-described linear light irradiation device 100. As illustrated in Fig. 6, in the linear light irradiation device 500, the first light source array and the second light source array are circular-shaped, and along with this, the filaments 11 of all the light sources 10 are provided on the same circle (circle C indicated by alternate long and short dash line in Fig. 6). In addition, although not illustrated, the first light source array and the second light source array may be ones of another curvilinear shape, and in this case, the filaments 11 of all the light sources 10 are provided in the same curved line.

In each of the above-described embodiments, in order to eliminate as much as possible the influence of the light passing through the tips 15 among the light emitted from the filaments 11 of the respective light sources 10, the tips 15 of the respective light sources 10 of both the light source arrays L1, 12, and the filaments 11 of the respective light sources 10 of both the light source arrays L1, L2 are arranged in an posture of being provided in the same plane, and one side of the plane is set as the emission direction of the linear light; however, as illustrated in Fig. 7, the tips 15 of the respective light sources 10 of both the light source arrays L1, L2, and the filaments 11 of the respective light sources 10 of both the light source arrays L1, L2 may be arranged in postures of being provided in the same plane and not being provided in the plane, respectively, and one side of the plane may be set as the emission direction of the linear light. Further, part or all of the light sources 10 of both the light source arrays L1, L2 may be arranged in respectively different postures.

In each of the above-described embodiments, the light emitted from the respective light sources 10 is condensed in a linear shape by the cylindrical lens 40; however, as illustrated in Fig. 8, the light emitted from the respective light sources 10 may be condensed by a reflective mirror 80. In addition, the reflective mirror 80 is arranged on the emission direction side of the linear light with respect to the light sources 10, and has a reflective surface of a curved surface shape.

The filaments 11 of the respective light sources 10 only have to be positions on the same straight line or on the same arc as viewed from on the optical axis (emission direction side) of the linear light, and for example, may be in a posture of being tilted to some extent as viewed from a direction orthogonal to the optical axis.

In each of the above-described embodiment, a bandpass filter may be arranged on the emission direction side of the linear light with respect to the lens, and from among the light emitted from the lens, only light in a specific wavelength range may be used as the linear light.

In each of the above-described embodiment, the light emitted from the respective light sources 10 is condensed in a linear shape by the cylindrical lens 40; however, the light emitted from the respective light sources 10 may be converted to parallel beams by the cylindrical lens 40.

In addition, in each of the above-described embodiments, as the light sources, halogen lamps are used; however, without limitation to this, it is only necessary to be incandescent lamps utilizing filament radiation due to Joule heat, and Krypton lamps or the like can also be used. Also, in each of the above-described embodiments, as the light source, one whose light emission part is connected to the socket via the terminals is used; however, the light source is not limited to this, but may be one whose light emission part is directly connected to the socket without any terminal.

Besides, the present invention is not limited to the above-described embodiments, but can be variously modified without departing from the scope thereof, and components in the respective embodiments may be appropriately combined.

### Industrial Applicability

According to the present invention, a conventionally commercially available, highly reliable, and inexpensive socket can be directly used, and the working effects of the present invention can be obtained without an increase in cost.

## Claims

1. A linear light irradiation device (100) comprising a first light source array (L1) and a second light source array (L2), the first and second light source arrays (L1, L2) each being adapted to array multiple light sources (10) each comprising a light emission part (12) having a filament (11) and a socket (20) connected with a back end of the light emission part (12), wherein at least the respective light sources (10) of the first light source array (L1) and the respective light sources (10) of the second light source array (L2) are alternately arranged along an array direction in respectively different postures, and the filaments (11) of the respective light sources (10) of both the light source arrays (L1, L2) are provided on a straight line or on an arc parallel to the array direction as viewed from a predetermined direction.

2. The linear light irradiation device (100) according to claim 1, wherein the sockets (20) of the respective light sources (10) of both the light source arrays (L1, L2) interpose the straight line or the arc on which the filaments are arrayed and are provided on both sides of it.

3. The linear light irradiation device (100) according to claim 1, wherein the respective light sources (10) of both the light source arrays (L1,L2) are provided in a same posture on a light source array basis, and the respective light sources (10) of the first light source array (L1) and the respective light sources (10) of the second light source array (L2) are provided in directly opposite postures.

4. The linear light irradiation device according to claim 1, wherein the light emission parts (12) of the respective light sources (10) of both the light source arrays (L1,L2) are connected to respectively different sockets (30).

## Patentansprüche

1. Vorrichtung (100) für eine lineare Lichtbestrahlung, aufweisend eine erste Lichtquellenreihe (L1) und eine zweite Lichtquellenreihe (L2), wobei die ersten und zweiten Lichtquellenreihen (L1, L2) jeweils dafür eingerichtet sind, mehrere Lichtquellen (10), die jeweils einen Lichtemissionsteil (12) mit einem Filament (11) und eine mit einem hinteren Ende des Lichtemissionsteils (12) verbundene Steckbuchse (20) aufweisen, aufzureihen, wobei
zumindest die jeweiligen Lichtquellen (10) der ersten Lichtquellenreihe (L1) und die jeweiligen Lichtquellen (10) der zweiten Lichtquellenreihe (L2) entlang einer Reihenrichtung in jeweils unterschiedlichen Stellungen abwechselnd angeordnet sind und
die Filamente (11) der jeweiligen Lichtquellen (10) der beiden Lichtquellenreihen (L1, L2) auf einer geraden Linie oder auf einem Bogen parallel zur Reihenrichtung, aus einer vorbestimmten Richtung gesehen, angeordnet sind.

2. Vorrichtung (100) für eine lineare Lichtbestrahlung nach Anspruch 1, wobei
die Steckbuchsen (20) der jeweiligen Lichtquellen (10) der beiden Lichtquellenreihen (L1, L2) die gerade Linie oder den Bogen, auf der oder dem die Filamente aufgereiht sind, zwischen sich aufnehmen und auf beiden Seiten davon angeordnet sind.

3. Vorrichtung (100) für eine lineare Lichtbestrahlung nach Anspruch 1, wobei
die jeweiligen Lichtquellen (10) der beiden Lichtquellenreihen (L1, L2) in einer gleichen Stellung auf Lichtquellenreihen-Basis angeordnet sind und die jeweiligen Lichtquellen (10) der ersten Lichtquellenreihe (L1) und die jeweiligen Lichtquellen (10) der zweiten Lichtquellenreihe (L2) in direkt entgegengesetzten Stellungen angeordnet sind.

4. Vorrichtung (100) für eine lineare Lichtbestrahlung nach Anspruch 1, wobei
die Lichtemissionsteile (12) der jeweiligen Lichtquellen (10) der beiden Lichtquellenreihen (L1, L2) mit jeweils unterschiedlichen Steckbuchsen (30) verbunden sind.

## Revendications

1. Dispositif de rayonnement lumineux linéaire (100) comprenant un premier réseau de sources lumineuses (L1) et un deuxième réseau de sources lumineuses (L2), les premier et deuxième réseaux de sources lumineuses (L1, L2) étant adaptés chacun pour disposer plusieurs sources lumineuses (10) comprenant chacune une partie d'émission lumineuse (12) ayant un filament (11) et une douille (20) reliée à une extrémité arrière de la partie d'émission lumineuse (12), dans lequel au moins les sources lumineuses (10) respectives du premier réseau de sources lumineuses (L1) et les sources lumineuses (10) respectives du deuxième réseau de sources lumineuses (L2) sont arrangées en alternance le long d'une direction de disposition dans des postures respectivement différentes, et les filaments (11) des sources lumineuses (10) respectives des deux réseaux de sources lumineuses (L1, L2) sont prévus sur une ligne droite ou sur un arc parallèle à la direction de disposition, vus depuis une direction prédéterminée.

2. Dispositif de rayonnement lumineux linéaire (100) selon la revendication 1, dans lequel les douilles (20) des sources lumineuses (10) respectives des deux réseaux de sources lumineuses (L1, L2) interposent la ligne droite ou l'arc sur lequel les filaments sont disposés et sont prévues des deux côtés de celui-ci.

3. Dispositif de rayonnement lumineux linéaire (100) selon la revendication 1, dans lequel les sources lumineuses (10) respectives des deux réseaux de sources lumineuses (L1, L2) sont prévues dans une même posture sur une base de réseau de sources lumineuses, et les sources lumineuses (10) respectives du premier réseau de sources lumineuses (L1) et les sources lumineuses (10) respectives du deuxième réseau de sources lumineuses (L2) sont prévues dans des postures directement opposées.

4. Dispositif de rayonnement lumineux linéaire selon la revendication 1, dans lequel les parties d'émission lumineuse (12) des sources lumineuses (10) respectives des deux réseaux de sources lumineuses (L1, L2) sont reliées à des douilles (30) respectivement différentes.
